# EUROPÄISCHE PATENTSCHRIFT

(11) **EP 1 868 114 B1**
(45) Veröffentlichungstag und Bekanntmachung des Hinweises auf die Patenterteilung: **18.11.2015**
(21) Anmeldenummer: 06012030.0
(22) Anmeldetag: 12.06.2006
(51) Int. Cl.: G06F 17/30, H04L 29/08, H04L 29/12

(54) **Vorrichtung und Verfahren zum Speichern und Abrufen von Objekten mit mehrdimensional adressierten, elektronischen Daten**
Device and method for storing and retrieving objects with multi-dimensionally addressed electronic data
Dispositif et procédé destinés à l'enregistrement et l'extraction d'objets contenant des données électroniques adressées de manière multidimensionnelle

(43) Veröffentlichungstag der Anmeldung: 19.12.2007
(73) Patentinhaber: Konrad-Zuse-Zentrum für Informationstechnik Berlin, 14195 Berlin (DE); Humboldt-Universität zu Berlin, 10099 Berlin (DE)
(72) Erfinder: Reinefeld, Alexander Prof. Dr., 14195 Berlin (DE); Schintke, Florian, 12161 Berlin (DE); Schütt, Thorsten, 12247 Berlin (DE)
(74) Vertreter: Bittner, Thomas L.

(56) Entgegenhaltungen:
- WO-A2-2004/027581
- US-B1- 6 772 141
- SCHUTT T ET AL: "Structured Overlay without Consistent Hashing: Empirical Results" CLUSTER COMPUTING AND THE GRID, 2006. CCGRID 06. SIXTH IEEE INTERNATIONAL SYMPOSIUM ON SINGAPORE 16-19 MAY 2006, PISCATAWAY, NJ, USA,IEEE, 16. Mai 2006 (2006-05-16), Seiten 8-8, XP010918147 ISBN: 0-7695-2585-7
- STOICA I ET AL: "CHORD: A SCALABLE PEER-TO-PEER LOOKUP PROTOCOL FOR INTERNET APPLICATIONS" IEEE / ACM TRANSACTIONS ON NETWORKING, IEEE / ACM, NEW YORK, NY, US, Bd. 11, Nr. 1, Februar 2003 (2003-02), Seiten 17-32, XP001144289 ISSN: 1063-6692
- RISSON ET AL: "Survey of research towards robust peer-to-peer networks: Search methods" COMPUTER NETWORKS, ELSEVIER SCIENCE PUBLISHERS B.V., AMSTERDAM, NL, Bd. 50, Nr. 17, 3. März 2006 (2006-03-03), Seiten 3485-3521, XP005655852 ISSN: 1389-1286
- ANTONIOS DASKOS ET AL: "PePeR: A Distributed Range Addressing Space for Peer-to-Peer Systems" DATABASES, INFORMATION SYSTEMS, AND PEER-TO-PEER COMPUTING, FIRST INTERNATIONAL WORKSHOP, 2004, Seiten 200-218, XP019002294
- GANESAN P ET AL: "One Torus to Rule them All: Multidimensional Queries in P2P Systems", PROCEEDINGS OF THE 7TH INTERNATIONAL WORKSHOP ON THE WEB AND DATABASES: COLOCATED WITH ACM SIGMOD/PODS 2004,, 17 June 2004 (2004-06-17), pages 19-24, XP009139285, DOI: DOI:HTTP://PORTAL.ACM.ORG/CITATION.CFM?ID= 1017081
- Chi Zhang ET AL: "SkipIndex: Towards a Scalable Peer-to-Peer Index Service for High Dimensional Data", , 28 May 2004 (2004-05-28), XP055085247, Retrieved from the Internet: URL:ftp://ftp.cs.princeton.edu/reports/200 4/703.pdf [retrieved on 2013-10-24]

## Beschreibung

Die Erfindung betrifft eine Vorrichtung und ein Verfahren zum Speichern / Abrufen von Objekten, die mehrdimensional adressierte, elektronische Daten umfassen, in einem System von mehreren Datenverarbeitungseinheiten, die jeweils eine Funktionalität einer Speichereinrichtung implementieren.

### Hintergrund der Erfindung

Techniken und Methoden aus dem Bereich des Peer-to-Peer-Computing (P2P) haben in den letzten Jahren vermehrt Eingang in Anwendungen mit verteilten Systemen (*"distributed computing* ") gefunden. Sowohl in ihrem klassischen Einsatzgebiet, den verteilten Informationssystemen, als auch im Bereich der sich selbst verwaltenden, komplexen Systeme (" *autonomic computing*") werden sie immer häufiger eingesetzt.

P2P-Systeme zeichnen sich gegenüber traditionellen Systemen durch ihre Skalierbarkeit aus. Diese wird durch die relative Unabhängigkeit der Knoten (Rechner) untereinander und deren Austauschbarkeit erreicht. Jeder Knoten kommuniziert nur mit einer kleinen Anzahl ihm bekannter anderer Knoten. Wenn zwischen zwei Knoten kein direkter Kontakt besteht, werden Informationen über Stellvertreter ausgetauscht. Dadurch müssen die Knoten auch in sehr großen verteilten Systemen nur eine fest definierbare Anzahl von Ressourcen zur Teilnahme an dem System aufbringen. Operationen, an denen mehr als ein Knoten teilnimmt, lassen sich durch eine geeignete Konstruktion der Kommunikationsverbindungen auch in großen Systemen effizient realisieren.

Um in herkömmlichen verteilten Systemen die Funktionsfähigkeit zu erhalten, muss ein großer Teil der vorhandenen Ressourcen für die Überwachung, Aufrechterhaltung und Reparatur des Systems aufgewandt werden. Die dafür benötigten Ressourcen können Software, Hardware oder Personal umfassen. P2P-Systeme benötigen weniger Ressourcen zur Aufrechterhaltung ihres Betriebs, da ihre verteilten Selbstheilungsmethoden *("self management algorithms* ") innerhalb eines beschränkten Horizonts arbeiten und deshalb niemals das gesamte System berücksichtigen. Die Verfahren sind so entworfen, dass die Komposition der lokalen Selbstheilungsmethoden das gesamte System stets in einem korrekten, lauffähigen Zustand bewahren. Für den korrekten Selbstheilungsprozess ist insbesondere keine Kenntnis des globalen Zustands des verteilten Systems notwendig; die Selbstheilung findet allein aufgrund lokalen Wissens statt.

Ein bekannter Schwachpunkt von Informationssystemen, die auf P2P-Systemen basieren, ist die mangelhafte Unterstützung komplexer Anfragesprachen *(" query language*"). In P2P-Systemen können elektronische Objekte gespeichert und gesucht werden, die sich anhand eines Namens oder Bezeichners eindeutig identifizieren lassen. In einfachen Systemen (Chord, CAN, Kademlia, ...) lassen sich nur Objekte finden, deren Name eindeutig und vollständig vor Beginn der Suche bekannt ist. Der Begriff "Name" wird nachfolgend als Synonym zu "Bezeichner" verwendet. Die Suche in solchen Systemen reduziert sich zur Frage, ob das gesuchte Objekt in dem System existiert. Fortgeschrittene Systeme erlauben die Angabe eines Namensbereiches, woraufhin das System alle bekannten Objekte liefert, deren Namen in diesem Namensbereich liegen. Solche Anfragen werden auch Bereichsanfragen (" *range queries* ") genannt.

Eine komplexere Namensklasse ist die der mehrdimensionalen Namen. Hier lassen sich Namen als d-Tupel (n0, ..., nd) in einem d-dimensionalen Namensraum darstellen. Solche Namen treten zum Beispiel in Geoinformationssystemen auf, wo die einzelnen Komponenten des Namens zum Beispiel räumliche (Höhe, Längengrad, Breitengrad, ...), temporale (Zeitpunkt, Zeitintervall, ...) oder physikalische (Luftdruck, Sicht, Wolkenbildung, ...) Eigenschaften bezeichnen.

Bei Bereichsanfragen für mehrdimensionale Namen werden zwei Klassen unterschieden, rechteckige und nicht-rechteckige Bereichsanfragen. Rechteckige Bereichsanfragen sind Bereichsanfragen, bei denen unabhängig für jede Dimension ein jeweils eindimensionaler Bereich erlaubter Werte angegeben wird. Die Gesamtheit aller maximal großen eindimensionalen Bereiche spannt den gesamten Namensraum auf. Nicht-rechteckige Bereichsanfragen werden durch eine Funktion definiert, die beliebigen Tupeln des Namensraumes einen Wahrheitswert zuordnen. Eine Suchanfrage liefert alle Namen, für die die Funktion "wahr" liefert.

Da die Definition für nicht-rechteckige Bereichsanfragen zu allgemein ist, werden im Folgenden nur solche Fälle behandelt, bei denen die Funktion einen einfach zu beschreibenden Teil des Namensraumes aufspannen. Für den dreidimensionalen Raum können dies zum Beispiel eine oder mehrere Kugeln, Kugel-Segmente, Schalen oder Schalensegmente definierter Dicke sein.

Es sind meherere Lösungsansätze bekannt. Bekannte Systeme (Ganesan et al., One Torus to Rule Them All: Multidimensional Queries in P2P Systems, WebDB 2004; Chawatheet al., A Case Study in building Layered DHT Applications, SIGCOMM'05, August 2005; Shu et al., Supporting Multi-dimensional Range queries in Peer-to-Peer Systems, P2P'05, September 2005) die mehrdimensionale Bereichsanfragen unterstützen, bilden den mehrdimensionalen Namensraum auf einen eindimensionalen Namensraum ab. Dazu werden raumfüllende Funktionen (space filling curves), wie zum Beispiel z-Funktionen oder Hilbert-Funktionen verwendet. Die so umgewandelten eindimensionalen Namen werden auf herkömmliche Art in einem P2P-System, das Bereichsanfragen unterstützt (vgl. zum Beispiel Schütt et al., Structured Overlay without Consistent Hashing: Empirical Results, GP2PC '06, Mai 2006) gespeichert. Mehrdimensionale Bereichsanfragen werden auf mehrere, getrennte eindimensionale Bereichsanfragen abgebildet.

Diese Systeme haben gravierende Nachteile: Sie unterstützen nur rechteckige Bereichsanfragen und selbst diese müssen bei mehrdimensionalen Anfragen in mehrere einzelne eindimensionale Anfragen zerlegt werden. Mit der Anzahl der Dimensionen steigt die Anzahl der Teile, in die die Anfrage zerlegt werden muss.

Ganesan et al. (vgl. One Torus to Rule Them All: Multidimensional Queries in P2P Systems. WebDB 2004) beschreiben ein weiteres System, dass auch nicht-rechteckige Bereichsanfragen unterstützt. Die Konstruktion ihres Systems basiert auf einem probabilistischen Ansatz und erlaubt daher keine präzisen Aussagen über die zu erwartende Suchleistung. Die Leistung kann nur mit einer gewissen Wahrscheinlichkeit angegeben werden; sie kann in einzelnen konkreten Anwendungsfällen schlechter sein, wodurch insbesondere keine Dienstgüte-Garantien *("quality of service*") definiert und eingehalten werden können.

### Zusammenfassung der Erfindung

Aufgabe der Erfindung ist es, eine Vorrichtung und ein Verfahren zum Speichern / Abrufen von Objekten, die mehrdimensional adressierte, elektronische Daten umfassen, in einem System von mehreren Datenverarbeitungseinheiten bereitzustellen, insbesondere hinsichtlich der Zeitökonomie, auch wenn von den Datenverarbeitungseinheiten einzelne unzuverlässig sind.

Die Erfindung wird durch eine Vorrichtung nach dem unabhängigen Anspruch 1 sowie ein Verfahren nach dem unabhängigen Anspruch 4 gelöst.

Nach einem Aspekt der Erfindung ist eine Vorrichtung mit einem System von mehreren Datenverarbeitungseinheiten, die jeweils eine Speichereinrichtung zum Aufnehmen / Abgeben von Objekten, die mehrdimensional adressierte, elektronische Daten umfasst, mit Prozessormitteln und Speichermitteln aufweisen, und physikalischen Datenaustauschverbindungen zwischen den mehreren Datenverarbeitungseinheiten, wobei
- in dem System ein virtuelles Netzwerk gebildet ist, in dem die mehreren Datenverarbeitungseinheiten als eine Torus-Anordnung von mehreren Speichern (S1, ..., Sn; n > 1) mit d Dimensionen (d > 1) abgebildet sind, und bei dem in jedem der mehreren Speicher (S1, ..., Sn) eine zugehörige Routing-Tabelle mit d Untertabellen gebildet ist, die elektronische Verweisinformation umfassende Einträge betreffend Kommunikationsverbindungen eines Speichers zu anderen der mehreren Speicher (S1, ..., Sn) aufweisen,
- jedem der mehreren Speicher (S1, ..., Sn) ein oder mehrere Namensbereiche eines Namensraums für Namen der Objekte zugeordnet sind, wobei über die d Dimensionen benutzten Wertebereiche des Namensraumes jeweils eine totale Ordnung definiert ist,
- die Namen der Objekte als Tupel (n0, ..., ng) (g < d) darstellbar sind, und
- für jeden der mehreren Speicher (Sx; x = 1, 2, ...; 1 ≤ x ≤ n) der mehreren Speicher (S1, ..., Sn) in dem virtuellen Netzwerk die elektronische Verweisinformation enthaltenden Einträge E_{Sx,a}[j, i] (1 ≤ j < b; 1 < b; 1 ≤ a ≤ d; 0 < i ≤ n) unter Nutzung einer Basis b für die a-te Dimension der Torus-Anordnung in der zugehörigen Routing-Tabelle wie folgt gebildet sind:

| | |
|---|---|
| Eintrag E_{Sx,a}[l, l] = | Verweis auf die Kommunikationsverbindung zu einem in der a-ten Dimension der Torus-Anordnung benachbarten Speicher; |
| ... | |
| Eintrag E_{Sx,a}[j, l]= | Eintrag E_{Sv,a}[k, l] in einem weiteren Speicher (Sv), auf den ein Eintrag E_{Sx,a}[m, l] in dem Speicher (Sx) verweist, wobei 2 ≤ j < b, 0 < k, m und wobei k, m wahlweise einer gültigen ganzzahligen Belegungen der Gleichung k + m = j entsprechen; |
| Eintrag E_{Sx,a}[l, i] = | Eintrag E_{Sv,a}[k, i - l] in einem weiteren Speicher (Sv), auf den ein Eintrag E_{Sx,a}[m, i - l] in dem Speicher (Sx) verweist, wobei 1 < i, 0 < k, m und wobei k, m wahlweise einer gültigen ganzzahligen Belegungen der Gleichung k + m = b entsprechen; |
| ... | |
| Eintrag E_{Sx,a}[j, i] = | Eintrag E_{Sv,a}[k, i] in einem weiteren Speicher (Sv), auf den ein Eintrag E_{Sx,a}[m, i] in dem Speicher (Sx) verweist, wobei 2 ≤ j < b, 1 < i, 0 < k, m und wobei k, m wahlweise einer gültigen ganzzahligen Belegungen der Gleichung k + m = j entsprechen. |

Nach einem weiteren Aspekt der Erfindung ist ein Verfahren geschaffen zum Suchen einer Datenverarbeitungseinheit auf eine Suchanfrage, um ein Objekt, welches mehrdimensional adressierte, elektronische Daten umfasst, in der Datenverarbeitungseinheit zu speichern / aus der Datenverarbeitungseinheit abzurufen, in einem System von mehreren Datenverarbeitungseinheiten, die jeweils eine Speichereinrichtung zum Aufnehmen / Abgeben des Objektes mit Prozessormitteln und Speichermitteln umfassen, und physikalischen Datenaustauschverbindungen zwischen den mehreren Datenverarbeitungseinheiten, wobei
- in dem System ein virtuelles Netzwerk gebildet ist, in dem die mehreren Datenverarbeitungseinheiten als eine Torus-Anordnung von mehreren Speichern (S1, ..., Sn; n > 1) mit d Dimensionen (d > 1) abgebildet sind, und bei dem in jedem der mehreren Speicher (S1, ..., Sn) eine zugehörige Routing-Tabelle mit d Untertabellen gebildet ist, die elektronische Verweisinformation umfassende Einträge betreffend Kommunikationsverbindungen eines Speichers zu anderen der mehreren Speicher (S1, ..., Sn) aufweisen,
- jedem der mehreren Speicher (S1, ..., Sn) ein oder mehrere Namensbereiche eines Namensraums für Namen der Objekte zugeordnet sind, wobei über die in den einzelnen Dimensionen genutzten Wertebereiche des Namensraumes jeweils eine totale Ordnung definiert ist, und
- die Namen der Objekte als Tupel (n0, ..., ng) (g < d) dargestellt werden,
wobei bei dem Verfahren die Suchanfrage nach dem Objekt in dem System erfasst wird, und ausgelöst durch die erfasste Suchanfrage anhand der elektronischen Verweisinformation in der zugehörige Routing-Tabelle die Datenverarbeitungseinheit ermittelt wird, und
wobei für jeden der mehreren Speicher (Sx; x = 1, 2, ...; 1 ≤ x ≤ n) der mehreren Speicher (S1, ..., Sn) in dem virtuellen Netzwerk die elektronische Verweisinformation enthaltenden Einträge E_{Sx,a}[j, i] (1 ≤ j < b; 1 < b; 1 ≤ a ≤ d; 0 < i ≤ n) unter Nutzung einer Basis b für die a-te Dimension der Torus-Anordnung in der zugehörigen Routing-Tabelle wie folgt gebildet sind:

| | |
|---|---|
| Eintrag E_{Sx,a}[l, l]= | Verweis auf die Kommunikationsverbindung zu einem in der a-ten Dimension der Torus-Anordnung benachbarten Speicher; |
| ... | |
| Eintrag E_{Sx,a}[j, l] = | Eintrag E_{Sv,a}[k, l] in einem weiteren Speicher (Sv), auf den ein Eintrag E_{Sx,a}[m, l] in dem Speicher (Sx) verweist, wobei 2 ≤ j < b, 0 < k, m und wobei k, m wahlweise einer gültigen ganzzahligen Belegungen der Gleichung k + m = j entsprechen; |
| Eintrag E_{Sx,a}[l, i] = | Eintrag E_{Sv,a}[k, i - l] in einem weiteren Speicher (Sv), auf den ein Eintrag E_{Sx,a}[m, i - l] in dem Speicher (Sx) verweist, wobei 1 < i, 0 < k, m und wobei k, m wahlweise einer gültigen ganzzahligen Belegungen der Gleichung k + m = b entsprechen; |
| ... | |
| Eintrag E_{Sx,a}[j, i] = | Eintrag E_{Sv,a}[k, i] in einem weiteren Speicher (Sv), auf den ein Eintrag E_{Sx,a}[m, i] in dem Speicher (Sx) verweist, wobei 2 ≤ j < b, 1 < i, 0 < k, m und wobei k, m wahlweise einer gültigen ganzzahligen Belegungen der Gleichung k + m = j entsprechen. |

Mit der Erfindung wird die selbstverwaltende Natur existierender P2P-Systeme bewahrt und zugleich mächtigere Anfragemöglichkeiten geschaffen, die die Leistungsmerkmale herkömmlicher Systemen übertreffen. Im Gegensatz zu Systemen, die auf raumfüllenden Funktionen basieren, werden mit der Erfindung auch nicht-rechteckige Bereichsanfragen unterstützt. Gegen die Arbeit von Ganesan et al. zeichnet sich diese Erfindung durch eine effizientere Suche, bessere Skalierbarkeit in höher-dimensionalen Namensräumen und garantierbare Leistung aus.

Die Zuordnung der mehreren Speicher zu den Bereichen des Namensraums ist nicht statisch, sondern kann jederzeit geändert werden. Änderungen können notwendig werden, wenn sich zum Beispiel die Anzahl der Speicher im System ändert oder wenn sich die Anzahl, die Verteilung oder die Verteilung der Anfragehäufigkeit der Namen der gespeicherten elektronischen Objekte ändert.

Die mehreren Speicher können zu beliebigen Zeitpunkten dem System beitreten und es auch wieder verlassen. Das Verlassen kann auch durch einen Ausfall geschehen und muss nicht vorher angekündigt werden. Die Speicherbedarf für die Verweisinformationen und der Aufwand für die Aufrechterhaltung des Systems ist so niedrig, dass auch Systeme mit Millionen von Speichern effizient einsetzbar sind. Der Speicher der mehreren Speicher kann größtenteils zur Speicherung der elektronischen Objekte verwendet werden, sodass sich Informationssysteme mit Billionen von Objekten entwerfen lassen.

Eine bevorzugte Weiterbildung der Erfindung sieht vor, dass die zugehörige Routing-Tabelle eine Anzahl von (b-1)*┌log_{b}n┐ Einträgen umfasst.

Bei einer zweckmäßigen Ausgestaltung der Erfindung kann vorgesehen sein, dass zumindest ein Teil der mehreren Datenverarbeitungseinheiten mit einer Anzahl von freien, unbelegten Dimensionen ausgestattet ist.

Darüber hinaus können die folgenden Ausgestaltungen des erfindungsgemäßen Verfahrens vorgesehen sein.

Eine vorteilhafte Ausführungsform der Erfindung sieht vor, dass die Anzahl der d Dimensionen der Torus-Anordnung verändert wird, indem aus der zugehörigen Routing-Tabelle eine der d Untertabellen entfernt oder der zugehörigen Routing-Tabelle eine weitere Untertabelle hinzugefügt wird.

Bei einer vorteilhaften Ausgestaltung der Erfindung kann vorgesehen sein, dass als Suchanfrage eine Bezeichneranfrage erfasst und eine Bezeichnersuche ausgeführt wird.

Eine Weiterbildung der Erfindung kann vorsehen, dass die Bezeichnersuche in einem Routingschritt eine der d Untertabellen verwendet, deren Kommunikationsverbindung zu einem dem Ziel nächstliegenden Speicher derart ausgeführt ist, dass die Kommunikationsverbindung zu einem der folgenden Speicher aus der Gruppe der mehreren Speicher, die in einem Routingschritt erreicht werden können, führt:
- ein Speicher, der insgesamt dem Ziel am nächsten liegt,
- ein Speicher mit dem größten Namensbereich,
- ein Speicher mit den meisten Nachbarn,
- ein zufällig gewählter Speicher,
- ein Speicher mit einer geringsten Verzögerungszeit,
- ein Speicher mit einer größten Routingtabelle,
- ein Speicher mit den größten Untertabellen bezüglich einer noch nicht oder am seltensten innerhalb eines aktuellen Routing-Pfades gerouteten Dimension,
- ein Speicher, dessen Routingtabelle eine größte Aktualität aufweist,
- ein Speicher, dessen Untertabellen bezüglich der noch nicht oder am seltensten innerhalb des aktuellen Routing-Pfades gerouteten Dimension die größte Aktualität aufweist, und
- ein Speicher, der über ein beim Routing in Form einer Funktion angegebenes Kriterium, das aus den Speichern einen oder mehrere Speicher selektiert, ausgewählt wird.

Eine bevorzugte Weiterbildung der Erfindung sieht vor, dass als Suchanfrage eine Bereichsanfrage erfasst und eine Bereichssuche ausgeführt wird.

Bei einer zweckmäßigen Ausgestaltung der Erfindung kann vorgesehen sein, dass die Bereichsanfrage als nicht-rechteckige Bereichsanfrage erfasst wird und bei der Ausführung der Bereichssuche ein einschränkendes Kriterium als Funktion verwendet wird, die jedem Namen der Objekte einen Wahrheitswert zuordnet.

Eine vorteilhafte Ausführungsform der Erfindung sieht vor, dass eine Anzahl von Zeilen-Einträgen in einer der d Untertabellen der zugehörigen Routing-Tabellen verringert oder vergrößert wird, wenn eine der folgenden Bedingungen festgestellt wird:
- eine Anzahl von in einer zugehörigen der d Dimensionen enthaltenen Speichern ändert sich,
- eine Frequenz von Suchanfragen auf Speicher in der zugehörigen der d Dimensionen erhöht sich über oder fällt unter einen vorgegebenen Wert,
- ein vorgegebenes Zeitintervall ist abgelaufen, und
- ein beim Hinzufügen eines Speichers als Funktion gegebenes Kriterium, das in zeitlichen Abständen überprüft wird, liefert einen Wert "verringern" oder "vergrößern".

Bevorzugt sieht eine Fortbildung der Erfindung vor, dass die Basis b gemäß einer der folgenden Bedingungen gewählt wird:
- die Basis b wird in verschiedenen der d Dimensionen unterschiedlich gewählt,
- die Basis b wird in verschiedenen der Speicher unterschiedlich gewählt, oder
- die Basis b wird dynamisch verändert mittels Entfernen oder Hinzufügen von Spalten in einer oder mehreren der d Untertabellen der zugehörigen Routing-Tabellen.

### Beschreibung bevorzugter Ausführungsbeispiele der Erfindung

Die Erfindung wird im Folgenden anhand von Ausführungsbeispielen unter Bezugnahme auf Figuren der Zeichnung näher erläutert. Hierbei zeigen:
- Fig. 1: eine schematische Darstellung eines Systems mit mehreren unabhängigen Speichern, die über Kommunikationsverbindungen verbunden sind,
- Fig. 2: eine schematische Darstellung, in welcher die mehreren Speicher des Systems aus Fig. 1 auf einem zweidimensionalen virtuellen Torus angeordnet und über Kommunikations-verbindungen verbunden sind,
- Fig. 3: eine schematische Darstellung der Komponenten eines der mehreren Speicher aus Fig. 1 im Detail,
- Fig. 4: eine schematische Darstellung zur Erläuterung der Funktion von Untertabellen einer Routing-Tabelle eines der mehreren Speicher aus Fig. 1,
- Fig. 5: eine schematische Darstellung zur Erläuterung eines Ablaufs beim Füllen der Routing-Tabelle eines der mehreren Speicher,
- Fig. 6: eine schematische Darstellung zur Erläuterung einer Suchanfrage in dem System mit mehreren Speichern aus Fig. 1, und
- Fig. 7: eine schematische Darstellung zur Erläuterung einer Suchanfrage mit Bereichsangaben in dem System mit mehreren Speichern aus Fig. 1.

Im Folgenden werden ein Verfahren und eine Vorrichtung zum Speichern / Abrufen von elektronischen Objekten, deren Namen als d-Tupel (nl, ..., nd) über einfachen oder über Bereichsprädikaten darstellbar sind, in einem System mit mehreren unabhängigen Datenverarbeitungseinheiten erläutert, die jeweils insbesondere die Funktionalität eines Schreib-Lese-Speichers implementieren. Hierbei ist n (n > 1) die Gesamtanzahl von unabhängigen Datenverarbeitungseinheiten in dem System. d ist die Anzahl der Dimensionen eines Namensraums (entspricht zum Beispiel der Anzahl der Attribute). b (b ≥ 2) bezeichnet die Basis für ein Routing (je größer b desto weniger Weiterleitungen der Suchanfrage).

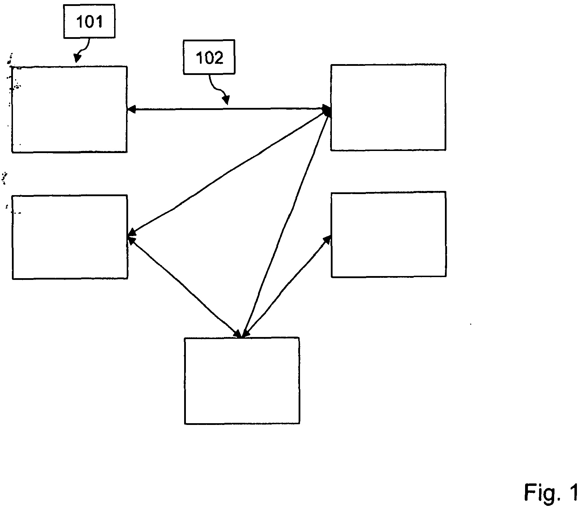

Fig. 1 zeigt eine schematische Darstellung eines Systems, bei dem es sich beispielsweise um ein Computer-Netzwerk handelt, mit mehreren unabhängigen Speichern 101, die als Schreib-Lese-Speicher oder Lese-Speicher (ROM, read only memory) ausgeführt sind, und Kommunikationsverbindungen 102 zwischen den mehreren Speichern 101. Über die Kommunikationsverbindungen 102 können elektronische Daten zwischen den Speichern 101 ausgetauscht werden. Die Gesamtheit der Kommunikationsverbindungen 102 zwischen den Speichern 101 wird als virtuelles Netzwerk (" *overlay network")* bezeichnet, da die Kommunikationsverbindungen 102 nicht mit den (physikalischen) Kommunikationsverbindungen in dem darunter liegenden physikalischen Netzwerk von Datenverarbeitungseinrichtungen übereinstimmen müssen. In dem System können Daten in die mehreren Speicher 101 geschrieben und mittels einer Suche zum Auslesen später wieder aufgefunden werden. Da die mehreren Speicher 101 als Schreib-Lese-Speicher ausgeführt sind und zwischen ihnen elektronische Daten austauschbar sind, ist in dem System auch die hierfür notwendige Datenverarbeitungskapazität zur Verfügung zu stellen, beispielsweise mit Hilfe geeigneter Prozessoren.

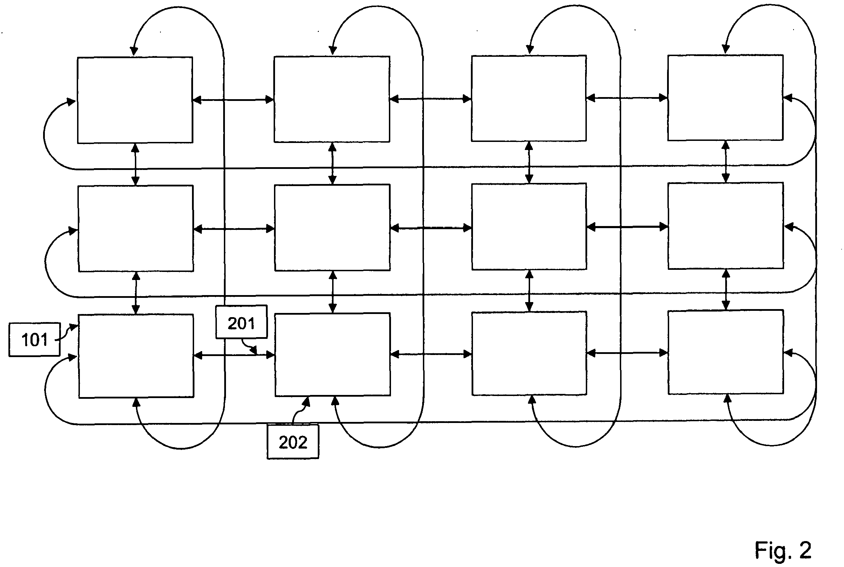

Fig. 2 zeigt eine schematische Darstellung einer logischen Netzwerk-Topologie zwischen den mehreren Speichern 101. Für gleiche Merkmale werden in Fig. 2 die selben Bezugszeichen wie in Fig. 1 verwendet.

Die mehreren Speicher 101 bilden eine d-dimensionale Torus-Anordnung, wobei in Fig. 2 der Spezialfall einer zweidimensionalen (d = 2) Torus-Anordnung gezeigt ist, und unterhalten Kommunikationsverbindungen 201 zu ihren direkten Nachbarn 202 auf der Torus-Anordnung. Die mehreren Speicher 101 bedecken die Torus-Anordnung im Normalfall vollständig; durch dynamische Einflüsse, zum Beispiel einen Ausfall von Speichern, können Lücken entstehen, indem einzelne oder mehrere Speicher übersprungen werden. Zum Funktionieren des Systems müssen lediglich alle Speicher erreichbar sein.

Die Anzahl der Nachbarn hängt von der Verteilung der mehreren Speicher 101 ab. Im Normalfall beträgt sie O(d), in sehr seltenen Ausnahmefällen kann sie bis zu O(n) betragen, was die Eigenschaften des Systems aber nicht negativ beeinflusst.

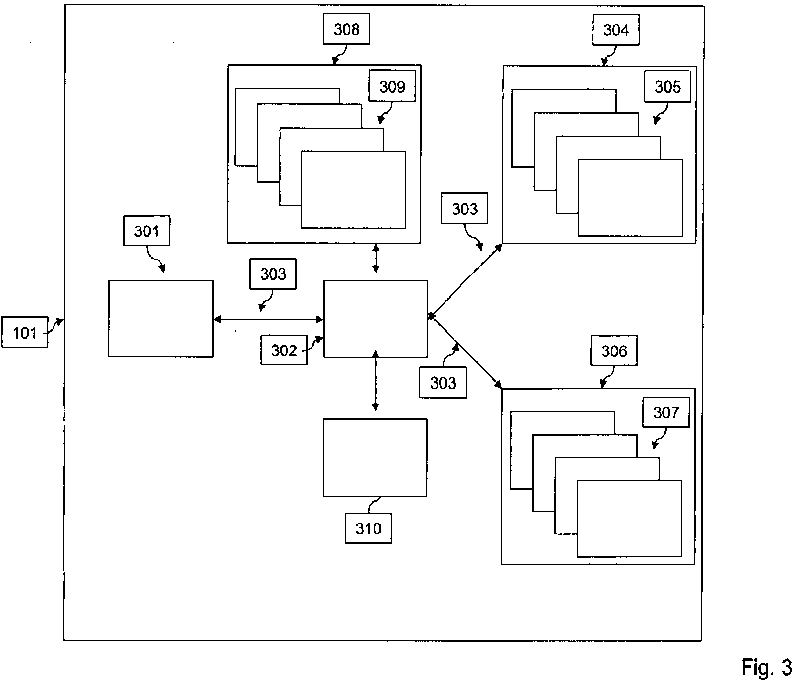

Fig. 3 zeigt eine schematische Darstellung von Komponenten eines der mehreren Speicher 101 aus Fig. 1 im Detail. Für gleiche Merkmale werden in Fig. 3 die selben Bezugszeichen wie in Fig. 2 verwendet.

Es sind ein Kommunikationsprozessor 301, ein Prozessor 302, interne Kommunikationsverbindungen 303, eine Routing-Tabelle 304, ein Speicher für elektronische Informationen über einen dem Speicher zugeordneten Namensbereich 306 und Speicherzellen 310 vorgesehen. Der Prozessor 302 vermittelt zwischen dem Kommunikationsprozessor 301 und den Speicherzellen 310 unter Zuhilfenahme der Routing-Tabelle 304, einer Tabelle von Nachbarn 308 und des dem Speicher zugeordneten Namensbereichs 306.

Der Kommunikationsprozessor 301 ist für die Kommunikation zwischen den Speichern 101 über die Kommunikationsverbindungen 102 mit anderen Speichern zuständig, für die Verweisinformationen in der Routing-Tabelle 304 gespeichert sind.

Die Routing-Tabelle 304 besteht aus den jeweils für eine der d Routing-Dimensionen zuständigen Untertabellen 305, wobei in Fig. 3 der Spezialfall einer vierdimensionalen (d = 4) Routing-Tabelle gezeigt ist. Analog ist der Namensbereich des Speichers 306 in die vier Namensbereichsuntertabellen 307, jeweils ein Namensbereich für jede der vier Dimensionen, aufgeteilt. Der Namensbereich 306 ist notwendig, um die Verantwortlichkeiten der mehreren Speicher 101 persistent zu speichern. Die Nachbarschaftstabelle 308 speichert die Kommunikationsverbindungen zu den Nachbarn in den vier Dimensionen in vier Untertabellen 309.

Die Routing-Tabelle 304 dient dem schnellen Auffinden der ein oder mehreren für eine Suchanfrage zuständigen Speicher der mehreren Speicher 101.

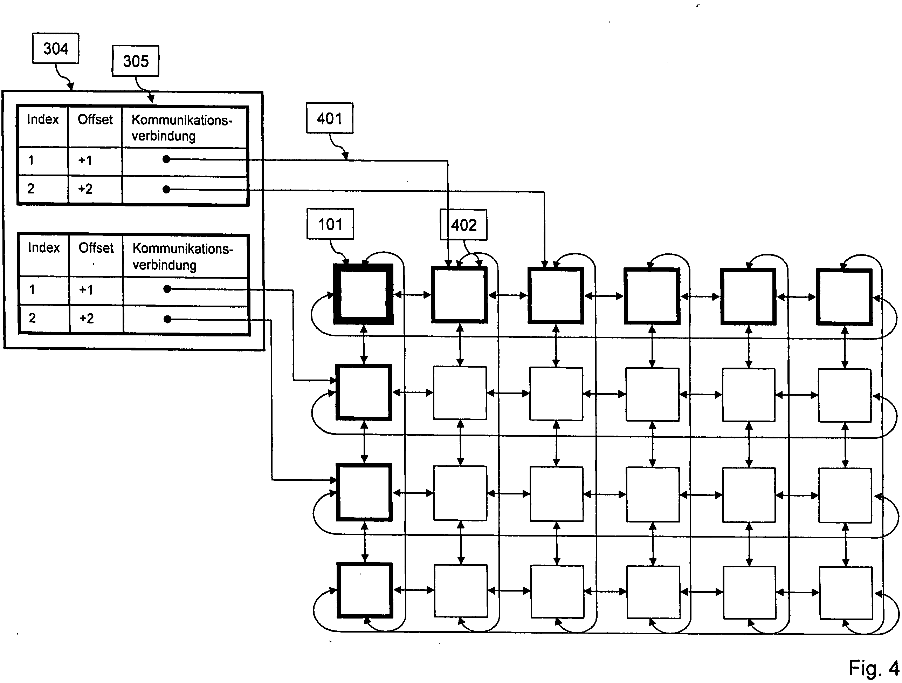

Fig. 4 zeigt eine schematische Darstellung der Routing-Tabelle 304 und ihrer Untertabellen 305 eines Speicher 101. Für gleiche Merkmale werden in Fig. 4 die selben Bezugszeichen wie in Fig. 3 verwendet.

Jede der mehreren Untertabellen 305 besteht aus mehreren Zeilen und Spalten. Jeder Eintrag in jeder der mehreren Untertabellen speichert eine Kommunikationsverbindung 401 zu einem der mehreren Speicher 402. Die Einträge werden wie weiter unten beschrieben berechnet. In dieser Figur wurde ohne Beschränkung der Allgemeinheit der Spezialfall d = 2 und b = 2 verwendet. Jede der mehreren Untertabellen 305 ist einer der mehreren Dimensionen zugeordnet. Eine erste Untertabelle verwendet als ersten Eintrag den ersten Nachbarn entlang einer x-Richtung und ist somit der x-Dimension zugeordnet. Eine zweite Untertabelle verwendet entsprechend den ersten Nachbarn entlang einer y-Richtung und ist somit der y-Dimension zugeordnet.

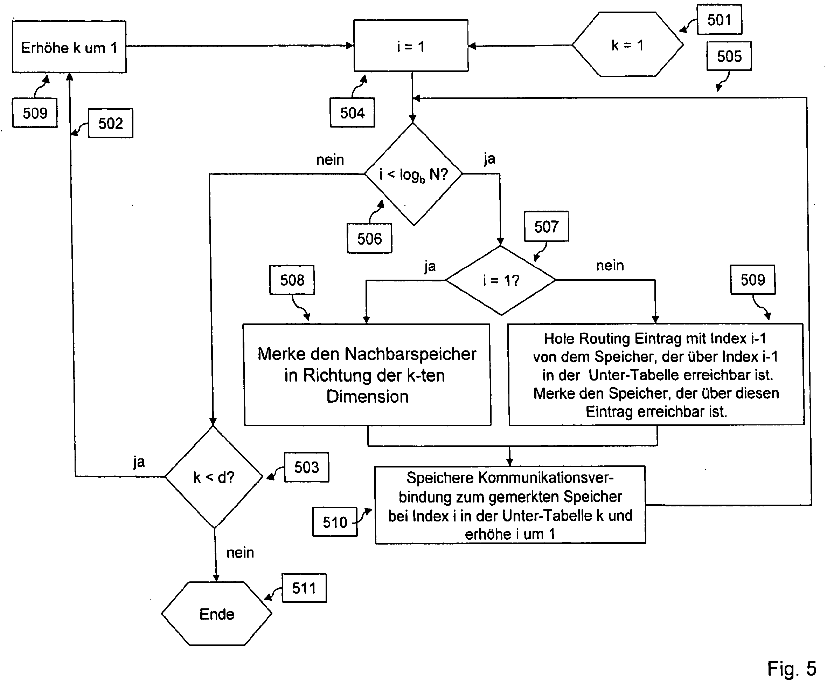

Fig. 5 zeigt eine schematische Darstellung zur Erläuterung eines Ablaufs beim Erstellen einer Routing-Tabelle 304 und zugehöriger Untertabellen 305 durch den Prozessor 302 (vgl. Fig. 3) für den Fall b = 2. Für gleiche Merkmale werden in Fig. 5 die selben Bezugszeichen wie in Fig. 4 verwendet.

Der Ablauf beginnt mit einer Initialisierung eines Zählers 501. Der Zähler 501 kontrolliert, wie oft eine Schleife 502 durchlaufen wird. Jeder Schleifendurchlauf endet mit der Überprüfung auf Abbruch einer äußeren Schleife 503. Die äußere Schleife 503 iteriert über alle Untertabellen 305 der Routing-Tabelle 304. Eine innere Schleife 505 beginnt mit einer Initialisierung eines Zählers 504. Der Zähler 504 kontrolliert, wie oft die innere Schleife 505 durchlaufen wird. Jeder Schleifendurchlauf beginnt mit der Überprüfung auf Abbruch 506 einer inneren Schleife 505 (hier wird beispielhaft angenommen, dass die Anzahl der mehreren Speicher 101 bekannt ist, andere Abbruchkriterien werden unten beschrieben), anschließend findet eine Überprüfung 507 statt, ob es sich um einen ersten Schleifendurchlauf handelt. Handelt es sich um den ersten Schleifendurchlauf, besteht der folgende Schritt aus dem Merken 508 der Kommunikationsverbindung zum Nachbarspeicher, im anderen Fall besteht der Schritt aus dem Merken 509 der Kommunikationsverbindung zum Speicher mit dem doppelten Abstand. Den Abschluss bildet das Speichern 510 der gemerkten Kommunikationsverbindung in der Routing-Tabelle. Wenn das Verfahren beim Ende 511 ankommt, wird die Ausführung abgebrochen.

Nachfolgend wird das Erstellen einer Routing-Tabelle zur Basis b = 2 näher erläutert.

Zunächst ist nur ein Nachbarspeicher im Uhrzeigersinn (das Verfahren funktioniert analog auch gegen den Uhrzeigersinn) für die jeweilige Dimension bekannt. Erläutert werden soll hier zunächst das Verfahren mit b = 2. Die k Einträge in der Untertabelle werden beginnend beim Index 1 durchnumeriert. Der erste Tabelleneintrag ist immer der erwähnte direkte Nachbar in Richtung der zugehörigen Dimension. Die folgenden Einträge werden jeweils mit Hilfe der vorherigen Einträge berechnet. Um einen Eintrag mit dem Index m in der Untertabelle einer Routing-Tabelle eines Speichers Sx zu berechnen, wird der Eintrag davor, also mit dem Index m-1 in derselben Untertabelle der Routing-Tabelle des Speichers Sx, genutzt. Über die dazugehörende Kommunikationsverbindung, die in der Untertabelle der Routing-Tabelle eingetragen ist, wird ein Speicher Sy gefragt, welcher Speicher über die in seiner zugehörigen Untertabelle der gleichen Dimension der Routing-Tabelle mit dem Index m-1 eingetragene Kommunikationsverbindung erreicht wird. Sei dies ein Speicher Sz. Eine Kommunikationsverbindung zu genau diesem Speicher Sz wird dann an einer Position m des ursprünglichen Speichers Sx eingetragen, was wie folgt zusammengefasst werden kann:

| | |
|---|---|
| Eintrag E_{Sx,a}[l, l] = | Verweis auf die Kommunikationsverbindung zum in der a-ten Dimension benachbarten Speicher. |
| ... | |
| Eintrag E_{Sx,a}[l, m] = | Eintrag E_{Sv,a}[l, m-l] in einem weiteren Speicher (Sv), auf den ein Eintrag E_{Sx,a}[l, m-l] in dem Speicher (Sx) verweist, wobei 1 < m ≤ k. |

Auf diese Weise werden die in den Untertabellen der Routing-Tabellen der mehreren Speicher verteilten elektronischen Informationen genutzt. Ein Speicher nahe dem Anfrageziel, in welchem der Name des gesuchten Objekts abgelegt ist, besitzt genauere Informationen über die Verteilung der Speicher in seiner unmittelbaren Umgebung als der suchende Speicher.

Nachfolgend wird das Erstellen einer Routing-Tabelle zur Basis b > 2 näher erläutert.

Für die Basis b können größere Werte gewählt werden, um die Anzahl der benötigten Schritte für eine Suche auf ┌log_{b} n┐ zu reduzieren. Die Einträge E_{Sx,a}[j, i] (1 ≤ j < b, 2 < b, 1 ≤ a ≤ d; 0 < i ≤ n) in den zugehörigen Routing-Tabellen werden dann wie folgt gebildet:

| | |
|---|---|
| Eintrag E_{Sx,a}[l, l] | Verweis auf die Kommunikationsverbindung zu einem in der a-ten Dimension der Torus-Anordnung benachbarten Speicher; |
| ... | |
| Eintrag E_{Sx,a}[j, l] = | Eintrag E_{Sv,a}[k, l] in einem weiteren Speicher (Sv), auf den ein Eintrag E_{Sx,a}[m, l] in dem Speicher (Sx) verweist, wobei 2 ≤ j < b, 0 < k, m und wobei k, m wahlweise einer gültigen ganzzahligen Belegungen der Gleichung k + m = j entsprechen; |
| Eintrag E_{Sx,a}[l, i] = | Eintrag E_{Sv,a}[k, i - l] in einem weiteren Speicher (Sv), auf den ein Eintrag E_{Sx,a}[m, i - l] in dem Speicher (Sx) verweist, wobei 1 < i, 0 < k, m und wobei k, m wahlweise einer gültigen ganzzahligen Belegungen der Gleichung k + m = b entsprechen; |
| ... | |
| Eintrag E_{Sx,a}[j, i] = | Eintrag E_{Sv,a}[k, i] in einem weiteren Speicher (Sv), auf den ein Eintrag E_{Sx,a}[m, i] in dem Speicher (Sx) verweist, wobei 2 ≤ j < b, 1 < i, 0 < k, m und wobei k, m wahlweise einer gültigen ganzzahligen Belegungen der Gleichung k + m = j entsprechen. |

Ist die Basis b > 2, so gibt es mehrere Alternativen, die Einträge der Untertabelle zu berechnen, die durch unterschiedliche Parameterwahl zur Lösung der Gleichung k + m = j oder entsprechend k+m=b definiert sind. Mit wachsendem b steigt die Anzahl der alternativen Berechnungsmöglichkeiten, was die Fehlertoleranz (zum Beispiel bei ausgefallenen entfernten Speicher) sowie die Güte der Einträge verbessert. Zur Verbesserung der Güte könnten zum Beispiel alle verfügbaren Lösungen berücksichtigt und ein geeignetes Ergebnis ausgewählt werden.

Auf diese Weise ermöglicht das beschriebene Verfahren, die bei CAN, Chord und anderen P2P-Systemen verwendete Hash-Funktion einzusparen, ohne dessen positiven Eigenschaften wie Skalierbarkeit, Fehlertoleranz oder dergleichen zu verlieren, aber gleichzeitig Bereichsanfragen zu ermöglichen.

Die Routing-Tabelle 304 eines Speichers 101 der mehreren Speicher 101 besteht aus einer oder mehrerer Untertabellen 305. Die Größe der Routing-Tabelle 304 kann in gewissen Grenzen frei gewählt werden, da ihre Existenz für die korrekte Funktion nicht notwendig ist. Sie dient insbesondere zur Beschleunigung der Suche nach Einträgen. Die Routing-Tabelle 304 enthält maximal d * (b-1) ┌log _{b} n┐ Einträge zu den Kommunikationsverbindungen 401, wobei d die Anzahl der Dimensionen, n die Gesamtanzahl der am System beteiligten mehreren Speicher 101 und b die Basis angeben. Dieser ungünstigste Fall tritt sehr selten auf; im durchschnittlichen Fall hat die Routing-Tabelle 304 (b-1)*┌log _{b} n┐Einträge zu den Kommunikationsverbindungen 401. Zusätzliche Einträge verbessern die Suchgeschwindigkeit nicht.

Jede Untertabelle 305 verwaltet so maximal ┌log_{b} n┐Zeilen mit jeweils b-1 Einträgen mit Kommunikationsverbindungen 401. Die Summe der Einträge aller Untertabellen 305 einer Routing-Tabelle 304 ist im Durchschnitt (b-1) ┌log _{b} n┐. Bei der regelmäßigen Überprüfung der Einträge in den Routing-Tabellen werden auch die Größen der Untertabellen überprüft.

Um die Einträge der Untertabelle 305 der Routing-Tabelle 304 eines der mehreren Speicher 101 neu aufzubauen oder zu aktualisieren, werden, beginnend beim ersten Eintrag, der den direkten Nachfolger enthält, alle Einträge der Untertabelle 305 gemäß den obigen Ausführungen zur Erstellung einer Routing-Tabelle neu berechnet. Da es sich um ein P2P-System handelt, ist dem Speicher 101 nicht bekannt, wie viele Speicher notwendig sind, um einen Ring entlang der betreffenden Dimension zu bilden. Der exakte Wert sei im folgenden R. Die optimale Anzahl der Einträge in der entsprechenden Untertabelle 305 wäre dann (b-1)┌log_{b} R┐.

Ein mögliches Verfahren zur Identifikation überflüssiger Einträge ergibt sich aus der Kenntnis, dass jeder Eintrag in der Untertabelle 305 auf einen Speicher zeigen muss, der zwischen dem durch den vorangegangenen Eintrag in derselben Untertabelle bezeichneten Speicher und dem aktuellen Speicher selber liegen muss, wobei der erste Eintrag der Untertabelle stets der direkte Nachfolger ist und das Wort "zwischen" sich auf die Ordnung in der jeweiligen Dimension bezieht. Wenn diese Bedingung nicht erfüllt ist, ist der Eintrag redundant und kann gelöscht werden.

Zur Laufzeit können Dimensionen hinzugefügt oder entfernt werden. Jede Dimension entspricht einem Namensbereich oder einem Attribut mit einem frei definierbaren Wertebereich. Um den im System von mehreren Speichern 101 enthaltenen Daten ein neues Attribut und damit eine neue Dimension hinzuzufügen, wird den Untertabellen 305 der Routing-Tabelle 304 (vgl. Fig. 3) eine weitere Untertabelle hinzugefügt und der Namensbereich des Speichers 306 entsprechend erweitert.

Die Einführung einer neuen Dimension kann auf verschiedene Arten realisiert werden, beispielsweise wie folgt:
- Alle der mehreren Speicher 101 werden bei Einführung der neuen Dimension informiert und ändern ihre Datenstrukturen entsprechend.
- Alle der mehreren Speicher 101 besitzen von vornherein eine frei wählbare, größere Anzahl von Dimensionen, von denen einige "ungebrauchte" noch nicht aufgeteilt sind.
- Alle der mehreren Speicher 101 nehmen implizit an allen möglichen Dimensionen der Torus-Anordnung teil, unabhängig davon, ob Daten über diese Dimension im System tatsächlich adressiert werden oder wurden. Hierfür wird keine Untertabelle benötigt und daher kein Speicherplatz belegt. Erst bei der ersten Aufteilung der Dimension in diesem Speicher wird dafür eine Untertabelle angelegt.

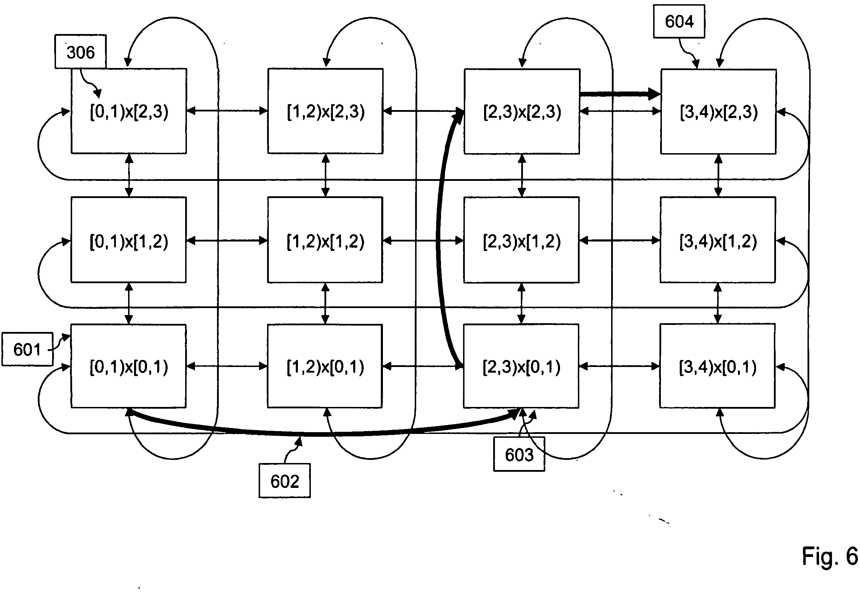

Fig. 6 zeigt eine schematische Darstellung des Ablaufs der Suche nach einem Bezeichner.

Falls die Suche von einer Komponente angestoßen wird, die nicht eine der mehreren Speicher 101 ist, muss sie einen der mehreren Speicher 101 mit der Suche beauftragen, die dieser stellvertretend ausführt. Die Suche beginnt bei einem Start-Speicher 601 der mehreren Speicher 101. Dieser durchsucht die Untertabellen 305 seiner Routing-Tabelle 304 nach Kommunikationsverbindungen 602, die auf einen der mehreren Speicher 603 verweisen, der dem Ziel 604 näher ist als der Speicher 601 selber. An diesen wird die Suchanfrage weitergereicht und das Verfahren dort entsprechend wiederholt. Das Weiterreichen der Suchanfrage wird solange wiederholt bis der Speicher 604 gefunden wurde, der für das gesuchte Datum zuständig ist. Die Terminierung dieses Prozesses ist garantiert, da mit jedem Schritt der Abstand zum Zielspeicher reduziert wird.

Um den Speicher und die Kommunikationsverbindung zu finden, für die der Abstand zum Ziel minimal ist, muss ein Maß für den Abstand definiert sein. Da jedem Speicher ein Teil des Namensraumes zugeordnet ist, könnte der Abstand eines ausgewählten Punktes dieses Teilraumes zum Punkt des gesuchten Namens als Abstandsmaß dienen. Der ausgewählte Punkt könnte beispielsweise eine bestimmte Ecke, der Schwerpunkt, oder der Mittelwert sein. Da die Untertabellen der mehreren Routing-Tabellen für jede der mehreren Dimensionen eine bevorzugte Richtung haben und in dieser mehr Informationen speichern, muss das Abstandsmaß diesem Umstand Rechnung tragen, deshalb wird ein gerichtetes Abstandsmaß verwendet. Ein anderes Abstandsmaß könnte zum Beispiel die Größe des vom Speicher verwalteten Raumes berücksichtigen, da Speicher, die einen großen Teil des Namensraums belegen, mehr Nachbarn besitzen und somit im nächsten Schritt auf mehr Informationen zurückgreifen können, um den Abstand zum Ziel wirkungsvoller zu verkürzen, als für Speicher mit einem kleineren Teil des Namensraums möglich wäre.

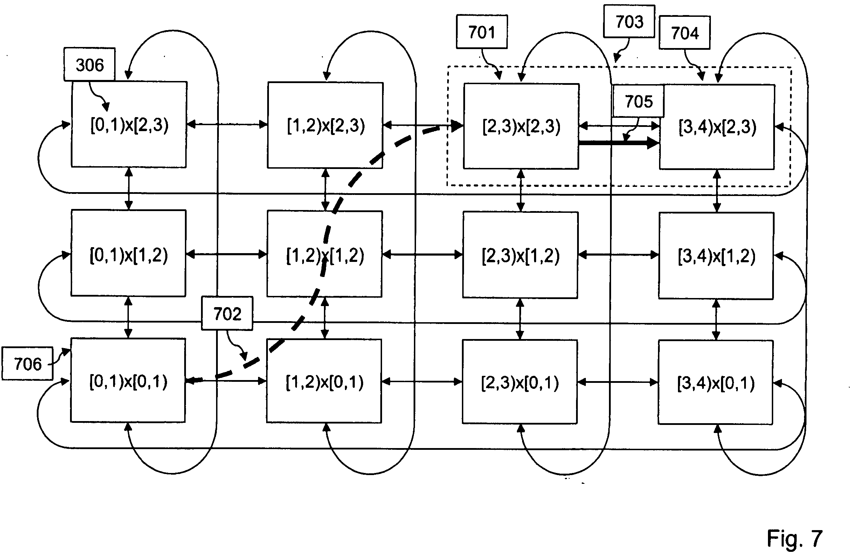

Fig. 7 zeigt eine schematische Darstellung des Ablaufs einer Bereichsanfrage.

Bereichsanfragen laufen ähnlich wie exakte Suchanfragen ab, wobei allerdings ein mehrstufiger Prozess verwendet wird, der mehr Flexibilität ermöglicht. Zunächst wird analog zur exakten Suchanfrage ein Speicher 701 über einen Routing-Pfad 702 gesucht, der für mindestens einen Teil des gesuchten Bereichs 703 zuständig ist. Wenn dieser Speicher gefunden ist, wird von dort die Suchanfrage solange rekursiv an die Nachbarn 704 über Weiterleitungen 705 weitergeleitet bis der gesamte gesuchte Bereich 703 abgedeckt ist. Das Suchergebnis ergibt sich aus der Vereinigung aller Teilergebnisse. In speziellen Fällen kann die Weiterleitung 705 auch über in den Routing-Tabellen 304 eingetragenen Kommunikationsverbindungen 401 erfolgen. Die beteiligten Speicher 701 und 704 senden ihre Teilergebnisse unabhängig und wahlweise über unterschiedliche Kommunikationsverbindungen zum suchenden Speicher 706. Im Gegensatz zu vergleichbaren konjunktiv verknüpften *"Select-Where* "-Anfragen relationaler Datenbanken werden keine überflüssigen Teilmengen übermittelt und am Zielort wieder herausgefiltert, was sowohl Bandbreite als auch Rechenkapazität spart.

Es bietet sich an, zunächst den Schwer- oder Mittelpunkt des zu durchsuchenden Bereichs zu suchen, da dadurch die Suchanfrage von dort in alle Richtungen annähernd gleich weit weitergeleitet werden muss. Es können aber auch mehrere Aufsatzpunkte gewählt werden, zum Beispiel die Ecken des gesuchten Bereiches, und anschließend wird von dort die Suchanfrage innerhalb des gesuchten Bereiches weitergeleitet. Durch die Erhöhung der Parallelität lässt sich die Laufzeit reduzieren.

Nicht-rechteckige Bereichsabfragen laufen analog zu rechteckigen Bereichsabfragen ab, da Speicher, deren zugeordnete Namensbereiche benachbart sind, auch im Netzwerk benachbart sind und so zusammenhängende Gebiete des Namensraums in direkt benachbarten Speichern gespeichert sind. Dadurch lassen sich sowohl rechteckige als auch nicht-rechteckige Bereichsanfragen über einen Aufsetzpunkt mit anschließender lokaler Suche ausführen. Herkömmliche Verfahren, die auf *space-filling curves* basieren, speichern den Namensraum zusammenhängender Gebiete hingegen nicht immer in benachbarten Speichern, was einen erhöhten Suchaufwand zur Folge hat, da mehrere unabhängige Suchen über das Netzwerk gestartet werden müssen.

Wenn ein Speicher dem System von mehreren Speichern 101 hinzugefügt werden soll, muss zunächst eine Kommunikationsverbindung 102 zu einem beliebigen der bereits im System vorhandenen Speicher 101 aufgebaut werden. Sodann wird einer der im System vorhandenen Speicher 101 ausgewählt, der seinen bisherigen Teil des Namensraumes mit dem neu hinzugekommenen Speicher teilen wird. Dieser Speicher kann zufällig oder aufgrund von Lastinformationen oder anderen Kriterien ausgewählt werden. Der Speicher, der bereits Teil des Systems ist, teilt seinen Teil des Namensraumes in zwei Teile. Für den einen der beiden Teile ist er selbst und für den anderen der beiden Teile ist der neu hinzugekommene Speicher fortan zuständig. Die einzige Einschränkung bei der Wahl der Teilung ist, dass der Schnitt parallel zu einer der mehreren Dimensionen sein muss. Die resultierenden Teile müssen weder gleich groß noch gleich viele gespeicherte Namen enthalten. Dadurch lässt sich der zugeteilte Teil des Namensraumes individuell an die Leistungsfähigkeit der mehreren Speicher oder an die erwartete Anfragelast anpassen.

Wenn sich die beiden Speicher auf eine Teilung geeinigt haben, werden die notwendigen gespeicherten Informationen an den neuen Speicher übertragen und dieser kann seine internen Datenstrukturen füllen und den Nachbarn seine Anwesenheit mitteilen. Die Nachbarn können dann entsprechend ihre Nachbarschaftstabellen 308 erneuern. Alternativ können die Nachbarschaftstabellen in regelmäßigen Zeitabständen überprüft und, falls erforderlich, aktualisiert werden.

Oft können Speicher das Verlassen des Systems nicht vorher ankündigen. Fehler können zu Zuständen führen, in denen dieses nicht mehr möglich ist. Deshalb müssen alle Speicher das System fortwährend oder in Abständen beobachten und auf Ereignisse entsprechend reagieren.

Wenn ein Speicher, der in einer Routing-Tabelle gespeichert ist, nicht mehr erreichbar ist, wird dieser Eintrag ignoriert und zu gegebener Zeit aktualisiert. Einzelne Verweise auf nicht erreichbare Speicher in der Routing-Tabelle gefährden die Stabilität des Gesamtsystems nicht. Kritischer sind Verweise auf nicht erreichbare Speicher in den Nachbarschaftstabellen. Wenn diese Einträge nicht rechtzeitig erneuert werden, können irreparable Schäden durch eine mögliche Partitionierung und damit einhergehende Unerreichbarkeit aktiver Speicher am virtuellen Netzwerk entstehen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren Ausführungsformen von Bedeutung sein.

## Patentansprüche

1. Vorrichtung mit einem System von mehreren Datenverarbeitungseinheiten (101), die jeweils eine Speichereinrichtung zum Aufnehmen / Abgeben von Objekten, die mehrdimensional adressierte, elektronische Daten umfasst, mit Prozessormitteln (301, 302) und Speichermitteln aufweisen, und physikalischen Datenaustauschverbindungen (102) zwischen den mehreren Datenverarbeitungseinheiten (101), wobei
- in dem System ein virtuelles Netzwerk gebildet ist, in dem die mehreren Datenverarbeitungseinheiten als eine Torus-Anordnung von mehreren Speichern (S1, ..., Sn; n > 1) mit d Dimensionen (d > 1) abgebildet sind, und bei dem in jedem der mehreren Speicher (S1, ..., Sn) eine zugehörige Routing-Tabelle (304) mit d Untertabellen (305) gebildet ist, die elektronische Verweisinformation umfassende Einträge betreffend Kommunikationsverbindungen (401) eines Speichers zu anderen der mehreren Speicher (S1, ..., Sn) aufweisen,
- jedem der mehreren Speicher (S1, ..., Sn) ein oder mehrere Namensbereiche eines Namensraums für Namen der Objekte zugeordnet sind, wobei über die d Dimensionen benutzten Wertebereiche des Namensraumes jeweils eine totale Ordnung definiert ist,
- die Namen der Objekte als Tupel (n0, ..., ng) (g < d) darstellbar sind, und
- für jeden der mehreren Speicher (Sx; x = 1, 2, ...; 1 ≤ x ≤ n) der mehreren Speicher (S1, ..., Sn) in dem virtuellen Netzwerk die elektronische Verweisinformation enthaltenden Einträge E_{Sx,a}[j, i] (1 ≤ j < b; 1 < b; 1 ≤ a ≤ d; 0 < i ≤ n) unter Nutzung einer Basis b für die a-te Dimension der Torus-Anordnung in der zugehörigen Routing-Tabelle (304) wie folgt gebildet sind:
| | |
|---|---|
| Eintrag E_{Sx,a}[l, l] = | Verweis auf die Kommunikationsverbindung zu einem in der a-ten Dimension der Torus-Anordnung benachbarten Speicher; |
| ... | |
| Eintrag E_{Sx,a}[j, l] = | Eintrag E_{Sv,a}[k, l] in einem weiteren Speicher (Sv), auf den ein Eintrag E_{Sx,a}[m, l] in dem Speicher (Sx) verweist, wobei 2 ≤ j < b, 0 < k, m und wobei k, m wahlweise einer gültigen ganzzahligen Belegungen der Gleichung k + m = j entsprechen; |
| Eintrag E_{Sx,a}[l, i] = | Eintrag E_{Sv,a}[k, i - 1] in einem weiteren Speicher (Sv), auf den ein Eintrag E_{Sx,a}[m, i - 1] in dem Speicher (Sx) verweist, wobei 1 < i, 0 < k, m und wobei k, m wahlweise einer gültigen ganzzahligen Belegungen der Gleichung k + m = b entsprechen; |
| ... | |
| Eintrag E_{Sx,a}[j, i] = | Eintrag E_{Sv,a}[k, i] in einem weiteren Speicher (Sv), auf den ein Eintrag E_{Sx,a}[m, i] in dem Speicher (Sx) verweist, wobei 2 ≤ j < b, 1 < i, 0 < k, m und wobei k, m wahlweise einer gültigen ganzzahligen Belegungen der Gleichung k + m = j entsprechen. |

2. Vorrichtung nach Anspruch 1, **dadurch gekennzeichnet, dass** die zugehörige Routing-Tabelle (304) eine Anzahl von (b-1)*┌log_{b} n┐ Einträgen umfasst.

3. Vorrichtung nach Anspruch 1 oder 2, **dadurch gekennzeichnet, dass** zumindest ein Teil der mehreren Datenverarbeitungseinheiten (101) mit einer Anzahl von freien, unbelegten Dimensionen ausgestattet ist.

4. Verfahren zum Suchen einer Datenverarbeitungseinheit auf eine Suchanfrage, um ein Objekt, welches mehrdimensional adressierte, elektronische Daten umfasst, in der Datenverarbeitungseinheit zu speichern / aus der Datenverarbeitungseinheit abzurufen, in einem System von mehreren Datenverarbeitungseinheiten (101), die jeweils eine Speichereinrichtung zum Aufnehmen / Abgeben des Objektes mit Prozessormitteln (301, 302) und Speichermitteln umfassen, und physikalischen Datenaustauschverbindungen (102) zwischen den mehreren Datenverarbeitungseinheiten (101), wobei
- in dem System ein virtuelles Netzwerk gebildet ist, in dem die mehreren Datenverarbeitungseinheiten als eine Torus-Anordnung von mehreren Speichern (S1, ..., Sn; n > 1) mit d Dimensionen (d > 1) abgebildet sind, und bei dem in jedem der mehreren Speicher (S1, ..., Sn) eine zugehörige Routing-Tabelle (304) mit d Untertabellen (305) gebildet ist, die elektronische Verweisinformation umfassende Einträge betreffend Kommunikationsverbindungen (401) eines Speichers zu anderen der mehreren Speicher (S1, ..., Sn) aufweisen,
- jedem der mehreren Speicher (S1, ..., Sn) ein oder mehrere Namensbereiche eines Namensraums für Namen der Objekte zugeordnet sind, wobei über die in den einzelnen Dimensionen genutzten Wertebereiche des Namensraumes jeweils eine totale Ordnung definiert ist, und
- die Namen der Objekte als Tupel (n0, ..., ng) (g < d) dargestellt werden,
wobei bei dem Verfahren die Suchanfrage nach dem Objekt in dem System erfasst wird, und ausgelöst durch die erfasste Suchanfrage anhand der elektronischen Verweisinformation in der zugehörige Routing-Tabelle (304) die Datenverarbeitungseinheit ermittelt wird, und
wobei für jeden der mehreren Speicher (Sx; x = 1, 2, ...; 1 ≤ x ≤ n) der mehreren Speicher (S1, ..., Sn) in dem virtuellen Netzwerk die elektronische Verweisinformation enthaltenden Einträge E_{Sx,a}[j, i] (1 ≤ j < b; 1 < b; 1 ≤ a ≤ d; 0 < i ≤ n) unter Nutzung einer Basis b für die a-te Dimension der Torus-Anordnung in der zugehörigen Routing-Tabelle (304) wie folgt gebildet sind:
| | |
|---|---|
| Eintrag E_{Sx,a}[l, l] = | Verweis auf die Kommunikationsverbindung zu einem in der a-ten Dimension der Torus-Anordnung benachbarten Speicher; |
| ... | |
| Eintrag E_{Sx,a}[j, l] = | Eintrag E_{Sv,a}[k, l] in einem weiteren Speicher (Sv), auf den ein Eintrag E_{Sx,a}[m, l] in dem Speicher (Sx) verweist, wobei 2 ≤ j < b, 0 < k, m und wobei k, m wahlweise einer gültigen ganzzahligen Belegungen der Gleichung k + m = j entsprechen; |
| Eintrag E_{Sx,a}[l, i] = | Eintrag E_{Sv,a}[k, i - 1] in einem weiteren Speicher (Sv), auf den ein Eintrag E_{Sx,a}[m, i - 1] in dem Speicher (Sx) verweist, wobei 1 < i, 0 < k, m und wobei k, m wahlweise einer gültigen ganzzahligen Belegungen der Gleichung k + m = b entsprechen; |
| ... | |
| Eintrag E_{Sx,a}[j, i] = | Eintrag E_{Sv,a}[k, i] in einem weiteren Speicher (Sv), auf den ein Eintrag E_{Sx,a}[m, i] in dem Speicher (Sx) verweist, wobei 2 ≤ j < b, 1 < i, 0 < k, m und wobei k, m wahlweise einer gültigen ganzzahligen Belegungen der Gleichung k + m = j entsprechen. |

5. Verfahren nach Anspruch 4, **dadurch gekennzeichnet, dass** die Anzahl der d Dimensionen der Torus-Anordnung verändert wird, indem aus der zugehörigen Routing-Tabelle (304) eine der d Untertabellen entfernt oder der zugehörigen Routing-Tabelle (304) eine weitere Untertabelle hinzugefügt wird.

6. Verfahren nach Anspruch 4 oder 5, **dadurch gekennzeichnet, dass** als Suchanfrage eine Bezeichneranfrage erfasst und eine Bezeichnersuche ausgeführt wird.

7. Verfahren nach Anspruch 6, **dadurch gekennzeichnet, dass** die Bezeichnersuche in einem Routingschritt eine der d Untertabellen verwendet, deren Kommunikationsverbindung zu einem dem Ziel nächstliegenden Speicher derart ausgeführt ist, dass die Kommunikationsverbindung zu einem der folgenden Speicher aus der Gruppe der mehreren Speicher (S1, ..., Sn), die in einem Routingschritt erreicht werden können, führt:
- ein Speicher, der insgesamt dem Ziel am nächsten liegt,
- ein Speicher mit dem größten Namensbereich,
- ein Speicher mit den meisten Nachbarn,
- ein zufällig gewählter Speicher,
- ein Speicher mit einer geringsten Verzögerungszeit,
- ein Speicher mit einer größten Routingtabelle,
- ein Speicher mit den größten Untertabellen bezüglich einer noch nicht oder am seltensten innerhalb eines aktuellen Routing-Pfades (702) gerouteten Dimension,
- ein Speicher, dessen Routingtabelle eine größte Aktualität aufweist,
- ein Speicher, dessen Untertabellen bezüglich der noch nicht oder am seltensten innerhalb des aktuellen Routing-Pfades (702) gerouteten Dimension die größte Aktualität aufweist, und
- ein Speicher, der über ein beim Routing in Form einer Funktion angegebenes Kriterium, das aus den Speichern (S1, ..., Sn) einen oder mehrere Speicher selektiert, ausgewählt wird.

8. Verfahren nach einem der Ansprüche 4 bis 7, **dadurch gekennzeichnet, dass** als Suchanfrage eine Bereichsanfrage erfasst und eine Bereichssuche ausgeführt wird.

9. Verfahren nach Anspruch 8, **dadurch gekennzeichnet, dass** die Bereichsanfrage als nicht-rechteckige Bereichsanfrage erfasst wird und bei der Ausführung der Bereichssuche ein einschränkendes Kriterium als Funktion verwendet wird, die jedem Namen der Objekte einen Wahrheitswert zuordnet.

10. Verfahren nach einem der Ansprüche 4 bis 9, **dadurch gekennzeichnet, dass** eine Anzahl von Zeilen-Einträgen in einer der d Untertabellen (305) der zugehörigen Routing-Tabellen (304) verringert oder vergrößert wird, wenn eine der folgenden Bedingungen festgestellt wird:
- eine Anzahl von in einer zugehörigen der d Dimensionen enthaltenen Speichern ändert sich,
- eine Frequenz von Suchanfragen auf Speicher in der zugehörigen der d Dimensionen erhöht sich über oder fällt unter einen vorgegebenen Wert,
- ein vorgegebenes Zeitintervall ist abgelaufen, und
- ein beim Hinzufügen eines Speichers als Funktion gegebenes Kriterium, das in zeitlichen Abständen überprüft wird, liefert einen Wert "verringern" oder "vergrößern".

11. Verfahren nach einem der Ansprüche 4 bis 10, **dadurch gekennzeichnet, dass** die Basis b gemäß einer der folgenden Bedingungen gewählt wird:
- die Basis b wird in verschiedenen der d Dimensionen unterschiedlich gewählt,
- die Basis b wird in verschiedenen der Speicher (S1, ..., Sn) unterschiedlich gewählt, oder
- die Basis b wird dynamisch verändert mittels Entfernen oder Hinzufügen von Spalten in einer oder mehreren der d Untertabellen (305) der zugehörigen Routing-Tabellen (304).

## Claims

1. A device with a system of several data processing units (101) that each include a memory apparatus for receiving / supplying objects, comprising multidimensionally addressed electronic data, with processor means (301, 302) and memory means and with physical data interchange connections (102) between the several data processing units (101), wherein
- a virtual network is formed in the system in which the several data processing units are represented as a torus arrangement of several memories (S1, ..., Sn; n > 1) with d dimensions (d > 1) and in which an associated routing table (304) with d subtables (305) is formed in each of the several memories (S1, ..., Sn), which subtables include entries comprising reference information and concerning communication connections (401) of a memory to other memories of the several memories (S1, ..., Sn),
- one or several name ranges of a name space for names of the objects are associated with each of the several memories (S1, ..., Sn), a total order being defined via the ranges of values of the name space that are used in d dimensions,
- the names of the objects can be represented as tuples (n0, ..., ng) (g > d), and
- the entries E_{Sx,a}[j, i] (1≤ j < b; 1< b; 1 ≤ a ≤ d; 0 < i ≤ n) containing electronic reference information are formed as follows for each of the several memories (Sx; x = 1, 2, ...; 1 ≤ x ≤ n) of the several memories (S1, ..., Sn) in the virtual network using a base b for the a-th dimension of the torus arrangement in the associated routing table (304):
| | |
|---|---|
| Entry E_{Sx,a}[l, l] = | Reference to the communication connection to a memory adjacent in the a-th dimension of the torus arrangement; |
| ... | |
| Entry E_{SX,a}[j, l] = | Entry E_{Sv,a}[k, l] in another memory (Sv) to which an entry E_{Sx,a}[m, l] in the memory (Sx) refers, with 2 ≤ j < b, 0 < k, m and in which k, m selectively correspond to a valid whole number occupancy of the equation k + m = j; |
| Entry E_{Sx,a}[l, i] = | Entry E_{Sv,a}[k, i - l] in another memory (Sv) to which an entry E_{Sx,a}[m, i - l] in the memory (Sx) refers, with 1 < i, 0 < k, m and in which k, m selectively correspond to a valid whole number occupancy of the equation k + m = b; |
| ... | |
| Entry E_{Sx,a}[j, i] = | Entry E_{Sv,a}[k, i] in another memory (Sv) to which an entry E_{Sx,a}[m, i] in the memory (Sx) refers, with 2 ≤ j < b, 1 < i, 0 < k, m and in which k, m selectively correspond to a valid whole number occupancy of the equation k + m = j; |

2. The device according to Claim 1, **characterized in that** the associated routing table (304) comprises a number of (b-1)* ┌log_{b} *n*┐ entries.

3. The device according to Claim 1 or 2, **characterized in that** at least part of the several data processing units (101) are provided with a number of free, unoccupied dimensions.

4. A method for searching a data processing unit upon a search query in order to store an object comprising multidimensionally addressed electronic data in the data processing unit / retrieve this object from the data processing unit in a system of several data processing units (101) that each comprise a memory apparatus for receiving / supplying the object with processor means (301, 302) and memory means and physical data interchange connections (102) between the several data processing units (101), in which
- a virtual network is formed in the system in which the several data processing units are represented as a torus arrangement of several memories (S1, ..., Sn; n > 1) with d dimensions (d > 1) and in which an associated routing table (304) with d subtables (305) is formed in each of the several memories (S1, ..., Sn) which subtables include entries comprising reference information and concerning communication connections (401) of a memory to other memories of the several memories (S1, ..., Sn),
- one or several name ranges of a name space for names of the objects are associated with each of the several memories (S1, ..., Sn), a total order being defined via the ranges of values of the name space that are used in the individual dimensions,
- the names of the objects are represented as tuples (n0, ..., ng) (g < d),
wherein in the method the search query for the object is detected in the system and the data processing unit is determined initiated by the detected search query using the electronic reference information in the associated routing table (304),
and
wherein the entries E_{Sx,a}[j, i] (1≤ j < b; 1< b; 1 ≤ a ≤ d; 0 < i ≤ n) containing electronic reference information are formed as follows for each of the several memories (Sx; x = 1, 2, ...; 1 ≤ x ≤ n) of the several memories (S1, ..., Sn) in the virtual network using a base b for the a-th dimension of the torus arrangement in the associated routing table (304):
| | |
|---|---|
| Entry E_{Sx,a}[l, l] = | Reference to the communication connection to a memory adjacent in the a-th dimension of the torus arrangement; |
| ... | |
| Entry E_{Sx,a}[j, l] = | Entry E_{Sv,a}[k, l] in another memory (Sv) to which an entry E_{Sx,a}[m, l] in the memory (Sx) refers, with 2 ≤ j < b, 0 < k, m and in which k, m selectively correspond to a valid whole number occupancy of the equation k + m = j; |
| Entry E_{Sx,a}[l, i] = | Entry E_{Sv,a}[k, i - l] in another memory (Sv) to which an entry E_{Sx,a}[m, i - l] in the memory (Sx) refers, with 1 < i, 0 < k, m and in which k, m selectively correspond to a valid whole number occupancy of the equation k + m = b; |
| ... | |
| Entry E_{Sx,a}[j, i] = | Entry E_{Sv,a}[k, i] in another memory (Sv) to which an entry E_{Sx,a}[m, i] in the memory (Sx) refers, with 2 ≤ j < b, 1 < i, 0 < k, m and in which k, m selectively correspond to a valid whole number occupancy of the equation k + m = j; |

5. The method according to Claim 4, **characterized in that** the number of d dimensions of the torus arrangement is changed **in that** one of the d subtables is removed from the associated routing table (304) or another subtable is added to the associated routing table (304).

6. The method according to Claim 4 or 5, **characterized in that** a designator query is detected as a search query and a designator search is performed.

7. The method according to Claim 6, **characterized in that** the designator search uses of one of the d subtables in a routing step whose communication connection to a memory closest to the target is designed in such a manner that the communication connection runs to one of the following memories from the group of several memories (S1, ..., Sn) that can be reached in a routing step:
- a memory that is on the whole the closest to the target,
- a memory with the largest name range,
- a memory with the most neighbors,
- a randomly selected memory,
- a memory with the least delay time,
- a memory with the largest routing table,
- a memory with the largest subtables regarding a dimension not yet routed or routed the least within a current routing path (702),
- a memory whose routing table has the largest current status,
- a memory whose subtables have the greatest current status regarding the dimension not yet routed or routed the least within the current routing path, and
- a memory chosen by a criterion indicated during routing in the form of a function, which criterion selects one or more memories from the memories (S1, ..., Sn).

8. The method according to any one of Claims 4 to 7, **characterized in that** a range query is detected as search query and a range search is performed.

9. The method according to Claim 8, **characterized in that** the range query is detected as a non-rectangular range query and that during the execution of the range search a limiting criterion is used as function that associates a truth value to each name of the objects.

10. The method according to any one of Claims 4 to 9, **characterized in that** a number of line entries in one of the d subtables (305) of the associated routing tables (304) is reduced or increased when one of the following conditions is determined:
- a number of memories contained in a dimension belonging to the d dimensions changes,
- a frequency of search queries in memories in the dimension belonging to the d dimensions rises above or falls below a set value,
- a set time interval has elapsed, and
- a criterion that is given as function when a memory is added and that is checked in time intervals supplies a value of "reduce" or "increase".

11. The method according to any one of Claims 4 to 10, **characterized in that** the base b is selected in accordance with one of the following conditions:
- base b is differently selected in different d dimensions,
- base b is differently selected in different memories (S1, ..., Sn), or
- base b is dynamically changed by removing or adding columns in one or more of the d subtables (305) of the associated routing tables (304).

## Revendications

1. Dispositif comportant un système de plusieurs unités de traitement de données (101), qui comprennent respectivement un dispositif de sauvegarde pour enregistrer/éditer des objets qui englobe des données électroniques à adresse multidimensionnelle, comprenant des moyens de traitement (301, 302) et des moyens de sauvegarde et des connexions d'échange de données physiques (102) entre les plusieurs unités de traitement de données (101), dans lequel
- est établi dans le système un réseau virtuel, dans lequel les plusieurs unités de traitement de données sont représentées sous forme d'un système de tore composé de plusieurs mémoires (S1, ..., Sn ; n > 1) à d dimensions (d > 1) et dans lequel, dans chacune des plusieurs mémoires (S1, ..., Sn), est établi un tableau de routage correspondant (304) comportant d sous-tableaux (305) qui contiennent des entrées comprenant des informations de référence électroniques concernant des liaisons de communication (401) d'une mémoire vers les autres parmi les plusieurs mémoires (S1, ..., Sn),
- sont associées à chacune des plusieurs mémoires (S1, ..., Sn) une ou plusieurs zones de nom d'un espace de nom pour les noms des objets, un ordre total étant respectivement défini par des plages de valeur utilisées via les d dimensions de l'espace de nom,
- les noms des objets pouvant être représentés sous forme de n-uplets (n0,..., ng) (g < d), et
- pour chacune des plusieurs mémoires (Sx ; x = 1, 2, ... ; 1 ≤ x ≤ n) des plusieurs mémoires (S1, ..., Sn) dans le réseau virtuel, les entrées E_{Sx,a}[j, i] (1 ≤ j < b ; 1 <b ; 1 ≤ a ≤ d ; 0 < i ≤ n) contenant les informations de référence électroniques étant définies comme suit en utilisant une base b pour la dimension en a du système de tore dans le tableau de routage correspondant (304) :
entrée Es_{x,a}[l, 1] = référence à la liaison de communication avec une mémoire voisine dans la dimension en a du système de tore ;
entrée Es_{x,a}[j, 1] = entrée Es_{v>a}[k, 1] dans une autre mémoire (Sv), à laquelle une entrée Es_{x,a}[m, 1] dans la mémoire (Sx) fait référence, sachant que 2 ≤ j < b,0 < k, m et sachant que k, m correspondent au choix à une affectation valable de nombre entier de l'équation k + m = j ;
entrée Es_{x,a}[l, i] = entrée Es_{v,a}[k, i - 1] dans une autre mémoire (Sv), à laquelle une entrée Es_{x,a}[m, i - 1] dans la mémoire (Sx) fait référence, sachant que 1 < i, 0 < k, m et sachant que k, m correspondent au choix à une affectation valable de nombre entier de l'équation k+m=b;
...
entrée Es_{x,a}[j, i] = entrée Esv,a[k, i] dans une autre mémoire (Sv), à laquelle une entrée Es_{x,a}[m, i] dans la mémoire (Sx) fait référence, sachant que 2 ≤ j < b, 1 < i, 0 < k, m et sachant que k, m correspondent au choix à une affectation valable de nombre entier de l'équation k + m = j.

2. Dispositif selon la revendication 1, **caractérisé en ce que** le tableau de routage correspondant (304) comprend un certain nombre d'entrées (b-1)*[log_{b} n].

3. Dispositif selon la revendication 1 ou 2, **caractérisé en ce qu'**au moins une partie des plusieurs unités de traitement de données (101) est équipée d'un certain nombre de dimensions libres non affectées.

4. Procédé de recherche dans une unité de traitement de données sur demande de recherche pour enregistrer/consulter dans l'unité de traitement de données un objet qui englobe des données électroniques à adresse multidimensionnelle, dans un système composé de plusieurs unités de traitement de données (101) qui comprend respectivement un dispositif de mémoire pour enregistrer/éditer l'objet à l'aide de moyens de traitement (301, 302) et de moyens de sauvegarde et de connexions d'échange de données physiques (102) entre les plusieurs unités de traitement de données (101), dans lequel
- est établi dans le système un réseau virtuel, dans lequel les plusieurs unités de traitement de données sont représentées sous forme d'un système de tore composé de plusieurs mémoires (S1, ..., Sn ; n > 1) à d dimensions (d > 1) et dans lequel, dans chacune des plusieurs mémoires (S1, ..., Sn), est établi un tableau de routage correspondant (304) comportant d sous-tableaux (305) qui contiennent des entrées comprenant des informations de référence électroniques concernant des liaisons de communication (401) d'une mémoire vers les autres parmi les plusieurs mémoires (S1,..., Sn),
- sont associées à chacune des plusieurs mémoires (S1, ..., Sn) une ou plusieurs zones de nom d'un espace de nom pour les noms des objets, un ordre total étant respectivement défini par des plages de valeur utilisées dans les dimensions individuelles de l'espace de nom, et
- les noms des objets pouvant être représentés sous forme de n-uplets (n0, ..., ng) (g < d),
sachant que, dans le procédé, la demande de recherche d'après l'objet est détectée dans le système et, suite à la demande de recherche détectée à partir des informations de référence électroniques dans le tableau de routage correspondant (304), l'unité de traitement de données est déterminée, et
sachant que, pour chacune des plusieurs mémoires (Sx ; x = 1, 2, ... ; 1 ≤ x ≤ n) des plusieurs mémoires (S1, ..., Sn) dans le réseau virtuel, les entrées Es_{x,a}[j, i] (1 ≤ j < b ; 1 < b ; 1 ≤ a ≤ d ; 0 < i ≤ n) contenant les informations de référence électroniques sont définies comme suit en utilisant une base b pour la dimension en a du système de tore dans le tableau de routage correspondant (304) :
entrée Es_{x,a}[l, 1] = référence à la liaison de communication avec une mémoire voisine dans la dimension en a du système de tore ;
...
entrée Es_{x,a}[j, 1] = entrée Es_{x,a}[k, 1] dans une autre mémoire (Sv), à laquelle une entrée Es_{x,a}[m, 1] dans la mémoire (Sx) fait référence, sachant que 2 ≤ j < b,0 < k, m et sachant que k, m correspondent au choix à une affectation valable de nombre entier de l'équation k + m = j ;
entrée Es_{x,a}[l, i] = entrée Es_{v,a}[k, i - 1] dans une autre mémoire (Sv), à laquelle une entrée Es_{x,a}[m, i - 1] dans la mémoire (Sx) fait référence, sachant que 1 < i, 0 < k, m et sachant que k, m correspondent au choix à une affectation valable de nombre entier de l'équation k+m=b;
entrée Es_{x,a}[j, i] = entrée Es_{v,a}[k, i] dans une autre mémoire (Sv), à laquelle une entrée Es_{x,a}[m, i] dans la mémoire (Sx) fait référence, sachant que 2 ≤ j < b, 1 < i, 0 < k, m et sachant que k, m correspondent au choix à une affectation valable de nombre entier de l'équation k + m = j.

5. Procédé selon la revendication 4, **caractérisé en ce que** le nombre des d dimensions du système de tore change du fait qu'on supprime dans le tableau de routage correspondant (304) un des d sous-tableaux ou qu'on ajoute un autre sous-tableau dans le tableau de routage correspondant (304).

6. Procédé selon la revendication 4 ou 5, **caractérisé en ce qu'**une demande d'identificateur est détectée en tant que demande de recherche et qu'une recherche d'identificateur est effectuée.

7. Procédé selon la revendication 6, **caractérisé en ce que** la recherche d'identificateur utilise dans une étape de routage un des d sous-tableaux dont la liaison de communication avec une mémoire la plus proches de la destination est établie de manière à ce que la liaison de communication mène à un des mémoires suivantes du groupe des plusieurs mémoires (S1, ..., Sn), qui peuvent être atteintes dans une étape de routage :
- une mémoire qui est globalement la plus proche de la destination,
- une mémoire ayant la zone de nom la plus longue,
- une mémoire ayant le plus de voisines,
- une mémoire sélectionnée aléatoirement,
- une mémoire ayant le temps de retardement le plus bref,
- une mémoire ayant le plus grand tableau de routage,
- une mémoire ayant les plus grands sous-tableaux par rapport à une dimension pas encore ou la plus rarement routée dans un chemin de routage actuel (702),
- une mémoire dont le tableau de routage est le plus récent,
- une mémoire dont les sous-tableaux sont les plus récents par rapport à la dimension pas encore ou la plus rarement routée dans le chemin de routage actuel (702), et
- une mémoire qui est sélectionnée par un critère indiqué sous forme d'une fonction lors du routage et qui sélectionne une ou plusieurs mémoires parmi les mémoires (S1, ..., Sn).

8. Procédé selon une des revendications 4 à 7, **caractérisé en ce qu'**une demande de zone est détectée en tant que demande de recherche et qu'une recherche de zone est effectuée.

9. Procédé selon la revendication 8, **caractérisé en ce que** la demande de zone est détectée sous forme d'une demande de zone non rectangulaire et qu'est utilisé comme fonction lors de la réalisation de la demande de zone un critère restrictif qui associe une valeur de probabilité à chaque nom des objets.

10. Procédé selon une des revendications 4 à 9, **caractérisé en ce qu'**un certain nombre d'entrées de lignes dans un des d sous-tableaux (305) des tableaux de routage correspondants (304) est diminué ou augmenté si un des états suivants est constaté :
- un certain nombre de mémoires contenues dans une dimension correspondante des d dimensions change,
- une fréquence de demandes de recherche sur mémoire dans la dimension correspondante des d dimensions augmente ou chute sous une valeur prédéfinie,
- un intervalle chronologique prédéfini est écoulé, et
- un critère donné en tant que fonction lors de l'ajout d'une mémoire et qui est contrôlé à des intervalles chronologiques donne une valeur « réduire » ou « augmenter ».

11. Procédé selon une des revendications 4 à 10, **caractérisé en ce que** la base b est sélectionnée suivant une des conditions suivantes :
- la base b est sélectionnée différemment dans différentes d dimensions,
- la base b est sélectionnée différemment dans différentes mémoires (S1, ..., Sn), ou
- la base b est modifiée dynamiquement par suppression ou ajout de colonnes dans un ou plusieurs des d sous-tableaux (305) des tableaux de routage correspondants (304).
